(19) Europäisches Patentamt
European Patent Office
Office européen des brevets

(11) Veröffentlichungsnummer: **0 456 151 A1**

(12) **EUROPÄISCHE PATENTANMELDUNG**

(21) Anmeldenummer: **91107306.2**

(22) Anmeldetag: **06.05.91**

(51) Int. Cl.[5]: **C08K 5/00**, //(C08K5/00,5:10, 5:42)

(30) Priorität: **11.05.90 DE 4015184**

(43) Veröffentlichungstag der Anmeldung: **13.11.91 Patentblatt 91/46**

(84) Benannte Vertragsstaaten: **AT BE CH DE ES FR GB IT LI NL**

(71) Anmelder: **HOECHST AKTIENGESELLSCHAFT**
**Postfach 80 03 20**
**W-6230 Frankfurt am Main 80(DE)**

(72) Erfinder: **Bergner, Klaus-Dieter**
**St.-Margareth-Strasse 17**
**W-8901 Biberbach(DE)**

(54) **Antistatisch ausgerüstete Kunststoff-Formmasse.**

(57) Eine Kunststoff-Formmasse, welche aus einem thermoplastischen oder duroplastischen Kunststoff und einem Antistatikum besteht, wobei das Antistatikum seinerseits ein Gemisch aus einer Verbindung der Formel I

$$R^1 \left[ (SO_3)_m M \right]_n \qquad (I)$$

und einer Verbindung der Formel II

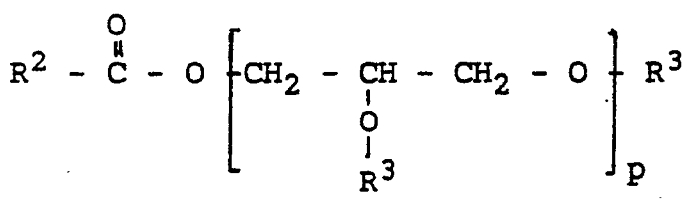

(II),

darstellt, zeichnet sich aufgrund der synergistischen Wirkungssteigerung zwischen den Verbindungen der Formeln I und II durch eine gute antistatische Ausrüstung auch bei niedrigen Einsatzmengen sowie durch gute physikalische und optische Eigenschaften aus.
Antistatika, bestehend aus einer synergistischen Mischung von Verbindungen der Formeln I und II, besitzen gegenüber den Einzelkomponenten eine bessere Lagerfähigkeit, leichtere Dosierbarkeit und bessere Einarbeitbarkeit.

EP 0 456 151 A1

Die vorliegende Erfindung bezieht sich auf eine antistatisch ausgerüstete Kunststoff-Formmasse, insbesondere auf Basis Polyvinylchlorid und Polystyrol, die durch ein besonderes Antistatikum gekennzeichnet ist.

Hohe Durchgangs- und spezifische Oberflächenwiderstände haben Kunststoffen einen bedeutenden Platz als isolierende Werkstoffe auf dem Elektro- und Elektroniksektor verschafft. Die gleichen strukturbedingten Eigenschaften führen jedoch bei allen Trennvorgängen von anderen Medien zu einer starken elektrostatischen Aufladung der Oberfläche. Diese ist aus verschiedenen Gründen unerwünscht:

- Bei der Masse der Gebrauchsgegenstände soll aus ästhetischen und hygienischen Gesichtspunkten eine Staubanziehung bei Lagerung und Gebrauch vermieden werden.
- Bei der Verarbeitung von Kunststoffteilen mit großer Oberfläche, z.B. Folien, Fasern oder Pulver, treten durch die statische Aufladung Kräfte auf, die den Verarbeitungsprozeß empfindlich stören. Sie können das ordnungsgemäße Aufwickeln von Kalanderfolien oder von Fasern verhindern. Folienbahnen können beim Verarbeiten oder auf Abfüllanlagen in unerwünschtem Maße aneinander haften. Bei der Förderung von Pulvern kann es zur Klumpen- oder Brückenbildung kommen. Auch die Bedruckbarkeit von Fertigteilen wird durch statische Aufladung beeinträchtigt.
- Entladungsvorgänge können zur Beschädigung verpackter Produkte führen.
- Funkenentladung kann schwerwiegende Unfälle nach sich ziehen, z.B. dort wo Feuer- und Explosionsgefahren beim Umgang mit leichtentzündlichen Gasen, Dämpfen und Stäuben, z.B. bei Lösemitteln oder im Bergbau bestehen.

Für alle diese Gebiete versucht man, durch geeignete Additive die Aufladbarkeit des Kunststoffs zu vermindern.

Eine Erhöhung der Leitfähigkeit von Kunststoffen zur Vermeidung von Aufladungen kann auf drei Wegen geschehen:

- Oberflächliches Auftragen eines "externen" Antistatikums aus einer Lösung,
- Einarbeiten eines "internen" (inkorporierbaren) Antistatikums in den Kunststoff,
- Einarbeiten von Zuschlagstoffen mit elektrischer Leitfähigkeit (Graphit, Metalle, organische Halbleiter).

Zuschlagstoffe mit elektrischer Leitfähigkeit werden eingesetzt, wenn der Oberflächenwiderstand des Fertigteils weniger als $10^8$ Ω sein soll. Wegen der hohen Zugabemengen von 2 bis 20 % werden die mechanischen Eigenschaften beeinträchtigt.

Externe und interne Antistatika sind Chemikalien, die in der Regel zusammen mit der Luftfeuchtigkeit an der Oberfläche des Kunststoffs einen leitfähigen Film bilden. Dies kann durch die Erzeugung eines reinen Feuchtigkeitsfilms durch wasseranziehende Substanzen oder durch Abscheidung eines organischen Elektrolyten geschehen.

Beide Gruppen haben ein ähnliches Aufbauprinzip: Ein hydrophobes Ende sorgt für die Verankerung des Additivs auf der Polymeroberfläche, ein stark polares Ende absorbiert Wassermoleküle, durch die nach dem Prinzip der Ionenleitfähigkeit Aufladungen beseitigt werden.

Externe Antistatika werden aus wäßrigen oder lösemittelhaltigen Präparationen auf die Oberfläche aufgebracht. Wirksam sind mehr oder weniger alle grenzflächenaktive Verbindungen, außerdem auch zahlreiche hygroskopische Substanzen, wie Glycerin, Polyole oder Polyglykole, denen das Merkmal der Grenzflächenaktivität fehlt.

Bei internen Antistatika wird das hydrophobe Molekülende fest in der Masse des Polymeren verankert.

Die meisten bekannten Antistatika lassen sich in kationaktive, anionaktive und nichtionogene Verbindungen unterteilen.

Kationaktive Verbindungen bestehen in der Regel aus einem voluminösen, oft einen langen Alkylrest enthaltenden Kation (z.B. einem quarternären Ammonium-, Phosphonium- oder Sulfoniumsalz), wobei die quarternäre Gruppe auch in einem Ringsystem (z.B. Imidazolin) auftreten kann. Das Anion ist in den meisten Fällen das vom Quarternierungsprozeß herrührende Chlorid-, Methylsulfat- oder Nitration. Als Handelsprodukte haben sich vor allem die quarternären Ammoniumsalze durchgesetzt.
Kationaktive Substanzen wirken am besten in polaren Polymeren. Ihre Anwendung wird allerdings durch ihren negativen Einfluß auf die Thermostabilität gewisser Polymeren eingeschränkt.

Anionaktive Verbindungen haben als aktiven Molekülteil ein Anion (meist ein Alkylsulfonat, -sulfat oder -phosphat, ein Dithiocarbamat oder Carboxylat). Als Kation dienen oft Alkali-, seltener Erdalkalimetalle. In der Praxis haben sich vor allem Natriumalkylsulfonate durchgesetzt, die eine gute antistatische Wirkung in polaren Polymeren entwickeln. Nachteilig ist, daß ihr Einsatz aufgrund der Trübungsneigung auf gedeckte Einfärbungen beschränkt ist. Wegen ihres sehr hohen Schmelzbereiches lassen sich Natriumalkylsulfonate oftmals nur sehr schwierig homogen in den auszurüstenden Kunststoff einarbeiten, ihr hydrophiler Charakter erschwert die Lagerung und Dosierung.

Bei nichtionogenen Verbindungen, beispielsweise Polyethylenglykolestern oder -ethern, Fettsäureestern

oder -ethanolamiden, Mono- oder Diglyceriden oder ethoxylierten Fettaminen, handelt es sich um ungeladene, grenzflächenaktive Moleküle von wesentlich geringerer Polarität als die der ionogenen Verbindungen. Derartige Produkte sind meist Flüssigkeiten oder wachsartige Substanzen mit niedrigem Erweichungsbereich. Ihre geringe Polarität und gute Verträglichkeit macht Vertreter dieser Verbindungsklassen zu idealen internen Antistatika für Polyolefine. Fettsäureester ein- und mehrwertiger Alkohole führen in hohen Einsatzmengen aber auch in polaren Kunststoffen zu akzeptablen antistatischen Ausrüstungen und ermöglichen im Gegensatz zu Alkylsulfonaten die Herstellung transparenter Formteile. Neben der notwendigen hohen Einsatzkonzentration, welche zu Verarbeitungsproblemen und zur Beeinflussung mechanischer und optischer Formteileigenschaften führen kann, hat sich die teilweise pastenförmige Konsistenz dieser Produkte mit Stockpunkten oberhalb der Raumtemperatur als nachteilig für den Einsatz dieser Produkte erwiesen.

Es ist bekannt, ein Gemisch von oberflächenaktiven Substanzen zur antistatischen Ausrüstung von Vinylchloridharzen einzusetzen (vgl. JP 51-031739). Das genannte Gemisch besteht aus einem Glycerinmonofettsäureester, einem Polyether, einem Alkyldiethanolamid und einem Alkylsulfonat. Das Gemisch wird als sehr wirksam bezeichnet, durch die Vielzahl der Gemischbestandteile wird jedoch die Anpassung an unterschiedliche Anforderungen erschwert.

Es wurde nun gefunden, daß bereits mit einem Gemisch von nur zwei oberflächenaktiven Verbindungen ausgezeichnete antistatische Effekte erzielt werden können.

Die Erfindung betrifft somit eine antistatisch ausgerüstete Kunststoff-Formmasse, bestehend aus 94 bis 99,95 Gew.-%, bezogen auf die Formmasse, eines thermoplastischen oder duroplastischen Kunststoffs und 0,05 bis 6 Gew.-%, bezogen auf die Formmasse, eines Antistatikums, seinerseits bestehend aus 5 bis 40 Gew.-%, bezogen auf das Antistatikum, einer Verbindung der Formel I

$$R^1 - \left[ (SO_3)_m M \right]_n \qquad (I)$$

worin $R^1$ einen geradkettigen oder verzweigten, aliphatischen Kohlenwasserstoffrest mit 4 bis 30 C-Atomen oder einen cycloaliphatischen Kohlenwasserstoffrest mit 6 bis 30 C-Atomen, wobei jede Sulfonatgruppe endständig oder mittelständig sein kann, M ein Alkali- oder Erdalkalimetallatom, m 1 oder 2 und n 1, 2, 3 oder 4 bedeuten, und 60 bis 95 Gew.-%, bezogen auf das Antistatikum, einer Verbindung der Formel II

$$R^2 - \overset{O}{\overset{\|}{C}} - O \left[ CH_2 - \underset{\underset{R^3}{|}}{\underset{O}{\underset{|}{CH}}} - CH_2 - O \right]_p - R^3 \qquad (II),$$

worin $R^2$ einen aliphatischen Kohlenwasserstoffrest mit 3 bis 23 C-Atomen, der durch ein oder zwei Hydroxylgruppen substituiert sein kann, einen cycloaliphatischen oder aromatischen Kohlenwasserstoffrest mit 6 bis 22 C-Atomen,
$R^3$ ein Wasserstoffatom oder den Rest

$$-\overset{O}{\overset{\|}{C}}-R^2,$$

worin $R^2$ die vorgenannte Bedeutung hat, und p 1, 2, 3 oder 4 bedeuten.

Die erfindungsgemäße Kunststoff-Formmasse enthält ein thermoplastisches oder duroplastisches organisches Polymer, beispielsweise eines der nachstehend aufgeführten:

1. Polyvinylchlorid.
2. Mischpolymerisate des Vinylchlorids, welche durch die bekannten Verfahren hergestellt werden können (z.B. Suspensions-, Masse-, Emulsionspolymerisation).
3. Mischpolymere des Vinylchlorids mit bis zu 30 Gew.-% an Comonomeren wie z.B. Vinylacetat,

Vinylidenchlorid, Vinylether, Acrylnitril, Acrylsäureester, Maleinsäuremono- oder -diester oder Olefinen, sowie Pfropfpolymerisate des Vinylchlorids.

4. Polystyrol, Poly(p-methylstyrol).

5. Copolymere von Styrol oder α-Methylstyrol mit Dienen oder Acrylderivaten, wie z.B. Styrol-Butadien, Styrol-Acryl nitril, Styrol-Ethylmethacrylat, Styrol-Butadien-Ethylacrylat, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol, wie z.B. Styrol auf Polybutadien, Styrol und Acrylnitril auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.

7. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z.B. Polyvinylidenchlorid, Polyvinylfluorid, Polyvinylidenfluorid; sowie deren Copolymere, wie beispielsweise Vinylidenchlorid-Vinylacetat.

8. Polymere, die sich von α,β-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere, wie z.B. Ethylenoxid, enthalten.

13. Polyphenylenoxide und -sulfide und deren Mischungen mit Styrolpolymeren.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

15. Polyamide und Copolyamide, die sich von Diaminen und Dicarbonsäuren und/oder Aminocarbonsäuren oder den entsprechenden Lactamen ableiten, wie Polyamid 4, Polyamid 6, Polyamid 6/6, Polyamid 6/10, Polyamid 11, Polyamid 12, Poly-2,4,4-trimethylhexamethylenterephthalamid, Poly-m-phenylenisophthalamid, sowie deren Block-Copolymere mit Polyethern, wie z.B. mit Polyethylenglykol, Polypropylenglykol oder Polytetramethylenglykol.

16. Polyharnstoffe, Polyimide und Polyamid-imide.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Poly-(2,2-bis (4-hydroxyphenyl)-propan)-terephthalat, Polyhydroxybenzoate, sowie Block-Polyether-ester, die sich von Polyethern mit Hydroxylendgruppen ableiten.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten, wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose.

27. Mischungen (Polyblends) der vorgenannten Polymeren, wie z.B. Polyamid 6/EPDM oder ABS, PVC/EVA, PVC/ABS, PVC/MBS, PC/ABS, PBTP/ABS.

Bevorzugt werden die unter 1) bis 9), 11) bis 19) und 27) genannten Polymeren, insbesondere die unter 1) bis 6), 8), 9), 11) bis 15), 17), 18) und 27) genannten Polymeren.

Als Antistatikum enthält die erfindungsgemäße Kunststoff-Formmasse ein Gemisch von Verbindungen der Formel I und II

$$R^1 - \left[ (SO_3)_m M \right]_n \qquad (I)$$

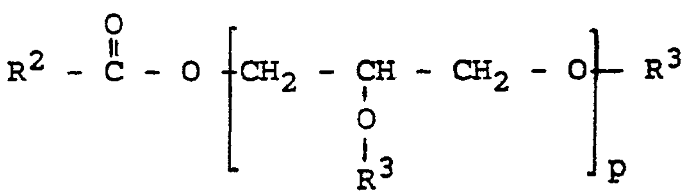

(II).

In diesen Formeln bedeuten

- $R^1$ einen geradkettigen oder verzweigten, aliphatischen Kohlenwasserstoffrest mit 4 bis 30, vorzugsweise 4 bis 20, insbesondere 10 bis 20 C-Atomen, oder cycloaliphatischen Kohlenwasserstoffrest mit 6 bis 30, vorzugsweise 6 bis 20 C-Atomen, wobei jede Sulfonatgruppe endständig oder mittelständig sein kann,
- $R^2$ einen aliphatischen Kohlenwasserstoffrest mit 3 bis 23 C-Atomen, der durch ein bis zwei Hydroxylgruppen substituiert sein kann, einen cycloaliphatischen oder aromatischen Kohlenwasserstoffrest mit 6 bis 22 C-Atomen, vorzugsweise einen aliphatischen Kohlenwasserstoffrest mit 8 bis 20 C-Atomen, der durch eine oder zwei Hydroxylgruppen substituiert sein kann, insbesondere den Alkylrest der technischen Cocosfettsäure,
- $R^3$ ein Wasserstoffatom oder den Rest

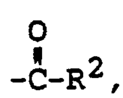

worin $R^2$ die vorgenannte Bedeutung hat, und

- M ein Alkali- oder Erdalkaliatom, vorzugsweise Natriumatom.
- m ist 1 oder 2, vorzugsweise 1,
- n ist 1, 2, 3 oder 4, vorzugsweise 1 oder 2, und
- p ist 1, 2, 3 oder 4.

Das Antistatikum besteht aus einem Alkylsulfonat der Formel I und einem Voll- oder Partialester der Formel II aus einem aliphatischen Polyol mit 3 bis 7 Hydroxylgruppen und einer Carbonsäure mit dem Rest $R^2$ mit der vorstehenden Bedeutung. Besonders bevorzugt ist ein Voll- oder Partialester von Mono-, Di-, Tri- oder Tetraglycerin mit technischer Cocosfettsäure, die im wesentlichen aus $C_{12}$-$C_{18}$-Fettsäuren besteht, jedoch geringe Mengen von $C_8$-$C_{10}$-Fettsäuren und Ölsäure enthält, im Gemisch mit einem Alkansulfonat, welches bis zu 40 Gew.-% Polysulfonat, vorzugsweise Disulfonat, enthält.

In der Regel besteht das Antistatikum aus je einer Verbindung der Formel I oder II. In Ausnahmefällen können jedoch mehrere Vertreter der einen und/oder der anderen Gruppe anwesend sein. Das Antistatikum

besteht aus 5 bis 40, vorzugsweise 10 bis 40 Gew.-%, der Verbindung oder Verbindungen der Formel I und 60 bis 95, vorzugsweise 60 bis 90 Gew.-%, der Verbindung oder Verbindungen der Formel II.

Die Verbindungen der Formel I und II sind an sich bekannt und im Handel erhältlich.

Das erfindungsgemäß zu verwendende Antistatikum kann in Form seiner Einzelbestandteile in die auszurüstenden Materialien eingearbeitet werden. Bevorzugt wird zunächst ein Gemisch hergestellt.

Zur Herstellung des erfindungsgemäß zu verwendenden Antistatikums sind alle Verfahren geeignet, die es ermöglichen, die Verbindungen der Formel I bei Mischungstemperaturen von 20 bis etwa 250 °C, bevorzugt 20 bis etwa 150 °C, besonders bevorzugt 20 bis etwa 100 °C in die Verbindungen der Formel II einzurühren, wobei das Mischungsverhältnis der Einzelkomponenten so gewählt wird, daß unter Ausnützung der Mischungslücken der Einzelkomponenten nach dem Abkühlen bei Raumtemperatur flüssige Antistatikmischungen entstehen, deren flüssiger Aggregatzustand bei Raumtemperatur auch durch Lagerung bei Temperaturen im Bereich von -50 bis +100 °C stabil bleibt (sich wie ein Eutektikum verhält).

Das neue Antistatikum wird nach allgemein üblichen Methoden in die organischen Polymeren eingearbeitet. Die Einarbeitung kann beispielsweise durch Einmischen der Verbindungen und gegebenenfalls weiterer Additive in die Schmelze vor oder während der Formgebung erfolgen. Auch durch Aufbringen der gelösten oder dispergierten Verbindungen auf das Polymere direkt oder Einmischen in eine Lösung, Suspension oder Emulsion des Polymeren, gegebenenfalls unter nachträglichem Verdunstenlassen des Lösemittels kann die Einarbeitung erfolgen. Die den Polymeren zuzusetzende Menge liegt bei 0,05 bis 6, vorzugsweise 0,1 bis 4, insbesondere 0,1 bis 2,5 Gew.-%, bezogen auf das auszurüstende Material.

Die Verbindungen können auch in Form eines Masterbatches, der diese Verbindungen beispielsweise in einer Konzentration von 1 bis 50, vorzugsweise 2,5 bis 30 Gew.-% enthält, den auszurüstenden Polymeren zugesetzt werden.

Neben dem Antistatikum kann die Kunststoff-Formmasse die üblichen Zusatzstoffe wie beispielsweise Antioxidantien, Verarbeitungsstabilisatoren, Lichtschutzmittel, Gleitmittel, Füllstoffe, Flammschutzmittel, Weichmacher, Treibmittel, Verarbeitungshilfsmittel, Schlagzähigkeitsmodifikatoren, Pigmente, Färbemittel oder Farbstoffe enthalten.

Zur weiteren Erläuterung der Erfindung dienen die folgenden Beispiele.

Beispiele 1 bis 3

Die Antistatikmischungen 1 bis 3 wurden in der Art und Weise hergestellt, daß die entsprechende Einsatzmenge eines Produktes der Formel II (vgl. Tabelle 1) in einem heizbaren Mischer vorgelegt, auf etwa 80 °C erwärmt und unter langsamem Rühren die entsprechende Menge des festen Alkylsulfonats der Formel I zugeführt wurde. Die Rührdauer war von der Geschwindigkeit des Auflösens des festen Alkylsulfonats abhängig und betrug bei der Antistatikmischung 2 ca. 1,5 Stunden. Überraschenderweise gingen im Beispiel 2 beide Einzelkomponenten eine stabile Mischung ein, eine Auskristallisation oder Phasentrennung des ursprünglich festen Alkylsulfonats oder der Verbindung der Formel II fand auch noch mehrmaligem Abkühlen auf -50 °C und Aufwärmen auf +80 °C nicht statt. Der Stockpunkt der Antistatikmischung war deutlich abgesenkt, es hatte sich ein Eutektikum gebildet.

Beispiele 4 und 5

Zusammen mit der entsprechenden Einsatzmenge eines Produktes der Formel II wurde einmal eine Menge Isotridecylstearat (Beispiel 4) und einmal eine Menge Glycerinmonooleat (Beispiel 5) in einem heizbaren Mischer vorgelegt, auf ca. 80 °C erwärmt und unter langsamem Rühren das Alkylsulfonat zugeführt (vgl. Tabelle 1).

**Tabelle 1**

| | Beispiele | | | | | Vergleichsbeispiele | |
|---|---|---|---|---|---|---|---|
| | 1 | 2 | 3 | 4 | 5 | A | B |
| Technischer Glycerincocosfettsäureester | 95 | 80 | 60 | 40 | 40 | 100 | - |
| Technisches Alkansulfonat (Gew.-%) ($C_{12-20}$ -Polysulfonatanteil < 40 %) | 5 | 20 | 40 | 40 | 40 | - | 100 |
| Isotridecylstearat Gew.-% | - | - | - | 20 | - | | |
| Glycerinmonooleat Gew.-% | - | - | - | - | 20 | - | - |
| Aggregatzustand nach Herstellung bei Raumtemperatur | flüssig | flüssig | pastenartig | flüssig | flüssig | pastenartig | fest |
| Aggregatzustand bei Raumtemperatur nach mehrmaligem Abkühlen auf -20°C und Erwärmen auf +80°C | fest (kristallisiert aus) | flüssig | fest (kristallisiert aus) | flüssig | fest | fest (kristallisiert aus) | fest |
| Stockpunkt | 13°C | 10°C | 16°C | 16°C | 16°C | 25°C | - |
| Erweichungspunkt | - | - | - | - | - | - | 200-220°C |

Die in den nachfolgenden Beispielen beschriebene Prüfung des Oberflächenwiderstands R erfolgte nach DIN 53482 mit einer Federzungenelektrode. Zusätzlich wurde die Halbwertszeit t, das ist die Zeit, in der eine auf die Oberfläche des Prüfkörpers aufgebrachte Ladung auf den halben Ausgangswert abgesunken ist, der antistatisch ausgerüsteten Prüfkörper gemessen. Die Beurteilung der antistatischen Ausrüstung erfolgte nach dem in der Tabelle 2 dargestellten Schema:

**Tabelle 2**

| Oberflächenwiderstand R (DIN 53482) Ω | Halbwertszeit t (Honestometer) (s) | antistatische Wirkung |
|---|---|---|
| < $10^9$ | 0 (keine Aufladung) | ausgezeichnet |
| $10^9$ bis $10^{10}$ | 1 | sehr gut |
| $10^{10}$ bis $10^{11}$ | 2 bis 10 | gut bis befriedigend |
| $10^{11}$ bis $10^{12}$ | 10 bis 60 | mäßig |
| > $10^{12}$ | > 60 | ungenügend |

Da die umgebende Luftfeuchtigkeit und die Lagerzeit der Prüfkörper für die Ausbildung des antistatischen Effekts eine erhebliche Rolle spielen, wurde die antistatische Ausrüstung der Prüfkörper jeweils nach 2-tägiger Lagerung im Normklima (23° C, 50 % relative Luftfeuchtigkeit) bestimmt.

Beispiel 6

Antistatische Ausrüstung von PVC-Hart, Sn-stabilisiert

100 Gewichtsteile Suspensions-Polyvinylchlorid K-Wert 60,
1,5 Gewichtsteile Octylzinnthioglykolat,
1 Gewichtsteil Acrylat-Verarbeitungshilfsmittel,
0,3 Gewichtsteile Glycerindioleat,
0,3 Gewichtsteile Montansäureester des Ethandiols und
x Gewichtsteile Prüfprodukt (vgl. Tabelle 3)

wurden in einem Heiz/Kühlmischer gemischt, bis eine Temperatur von 120° C erreicht war. Nach dem Abkühlen auf Raumtemperatur wurde das Compound 2 Tage gelagert (Reifen).

Danach wurde das Compound in einem Kleinkneter (Brabender) bei 120° C plastiziert (Knetzeit = Plastizierzeit + 2 min) und die plastische Masse in einer Zweiplattenpresse bei 190° C zu Platten 60 x 60 x 1 mm verpreßt (Preßzeit: 2 min bei 0 bar + 4 min bei 200 bar). Die fertigen Platten wurden 2 Tage bei 23° C und 50 % rel. Luftfeuchtigkeit gelagert. Anschließend wurden an den Platten die antistatischen Eigenschaften gemessen. Die Meßergebnisse sind in Tabelle 3 zusammengefaßt.

**Tabelle 3**

| | ohne Antistatikum | Produkte gemäß Beispiel | | | | | |
|---|---|---|---|---|---|---|---|
| | | A | B | A | B | 2 | 4 |
| Einsatzmenge x (GT) | - | 1,2 | 0,3 | 1,5 | 1,5 | 1,5 | 1,5 |
| Beurteilung der AST-Ausrüstung | ungenügend | mäßig | ungenügend | mäßig | gut | gut | gut |
| Transparenz (%) an 2 mm-Preßplatten | 79 | 81 | 38 | 82 | 15 | 72 | 65 |

Beispiel 7

Antistatische Ausrüstung von PVC-Hart, Pb-stabilisiert

100 Gewichtsteile Suspensions-Polyvinylchlorid K-Wert 68,
0,6 Gewichtsteile dreibasisches Bleisulfat
0,5 Gewichtsteile zweibasisches Bleistearat
0,3 Gewichtsteile Calciumstearat
0,3 Gewichtsteile Montansäureester des Ethandiols und
x Gewichtsteile Prüfprodukt (vgl. Tabelle 4)

wurden in einem Heiz/Kühlmischer gemischt, bis eine Temperatur von 120 °C erreicht war. Nach dem Abkühlen auf Raumtemperatur wurde das Compound 2 Tage gelagert (Reifen).

Danach wurde das Compound in einem Kleinkneter (Brabender) bei 120 °C plastiziert (Knetzeit = Plastizierzeit + 2 min) und die plastische Masse in einer Zweiplattenpresse bei 190 °C zu Platten 60 x 60 x 1 mm verpreßt (Preßzeit: 2 min bei 0 bar + 4 min bei 200 bar). Die fertigen Platten wurden 2 Tage bei 23 °C und 50 % rel. Luftfeuchtigkeit gelagert. Anschließend wurden an den Platten die antistatischen Eigenschaften gemessen. Die Meßergebnisse sind in Tabelle 4 zusammengefaßt.

**Tabelle 4**

| | ohne Antistatikum | Produkte gemäß Beispiel | | | | | |
|---|---|---|---|---|---|---|---|
| | | A | B | A | B | 2 | 4 |
| Einsatzmenge x (GT) | - | 1,2 | 0,3 | 1,5 | 1,5 | 1,5 | 1,5 |
| Beurteilung der AST-Ausrüstung | ungenügend | ungenügend | ungenügend | ungenügend | mäßig | gut | mäßig |

Beispiel 8

Antistatische Ausrüstung von PVC-Hart, Ca/Zn-stabilisiert

100 Gewichtsteile Suspensions-Polyvinylchlorid K-Wert 68,
0,3 Gewichtsteile Calciumstearat
0,1 Gewichtsteile Zinkoctoat
0,2 Gewichtsteile Stearinsäure
0,2 Gewichtsteile Paraffin Smp. 71 °C
0,5 Gewichtsteile Montansäureester des Butandiols, teilverseift
0,1 Gewichtsteile Polyethylenwachs Smp. 120 °C und
x Gewichtsteile Prüfprodukt (vgl. Tabelle 5)

wurden in einem Heiz/Kühlmischer gemischt, bis eine Temperatur von 120 °C erreicht war. Nach dem Abkühlen auf Raumtemperatur wurde das Compound 2 Tage gelagert (Reifen).

Danach wurde das Compound in einem Kleinkneter (Brabender) bei 120 °C plastiziert (Knetzeit = Plastizierzeit + 2 min) und die plastische Masse in einer Zweiplattenpresse bei 190 °C zu Platten 60 x 60 x 1 mm verpreßt (Preßzeit: 2 min bei 0 bar + 4 min bei 200 bar). Die fertigen Platten wurden 2 Tage bei 23 °C und 50 % rel. Luftfeuchtigkeit gelagert. Anschließend wurden an den Platten die antistatischen Eigenschaften gemessen. Die Meßergebnisse sind in Tabelle 5 zusammengefaßt.

**Tabelle 5**

| | ohne Antistatikum | Produkte gemäß Beispiel | | | | | |
|---|---|---|---|---|---|---|---|
| | | A | B | A | B | 2 | 4 |
| Einsatzmenge x (GT) | - | 1,2 | 0,3 | 1,5 | 1,5 | 1,5 | 1,5 |
| Beurteilung der AST-Ausrüstung | ungenügend | ungenügend | ungenügend | ungenügend | gut | gut | mäßig |
| Transparenz (%) an 2 mm-Preßplatten | 77 % | 70 % | 60 % | 65 % | 15% | 60% | 50 % |

Beispiel 9

Antistatische Ausrüstung von HI-PS

100 Gewichtsteile schlagzähes Polystyrol (MFI 200/5: 3g/10 min) und

x Gewichtsteile Prüfprodukt

wurden vorgemischt und auf einem Zweischneckenextruder (200/210/220/230 °C) granuliert. Aus dem Granulat wurden auf einer Spritzgußmaschine (200/210/220/230 °C, Spritzdruck 100 bar; Nachdruck 80 bar; Einspritzzeit 10 sec) Prüfplatten mit den Maßen 60x60x4 mm gespritzt. Nach zweitägiger Lagerung bei 23 °C und 50 % rel. Luftfeuchtigkeit wurden die antistatischen Eigenschaften der Prüfplatten gemessen. Ergebnisse in Tabelle 6.

**Tabelle 6**

| | ohne Antistatikum | Produkte gemäß Beispiel | | | | |
|---|---|---|---|---|---|---|
| | | A | B | A | B | 2 |
| Einsatzmenge x (GT) | - | 1,2 | 0,3 | 1,5 | 1,5 | 1,5 |
| Beurteilung der AST-Ausrüstung | ungenügend | ungenügend | ungenügend | ungenügend | gut | gut |

**Patentansprüche**

1. Antistatisch ausgerüstete Kunststoff-Formmasse, bestehend aus 94 bis 99,95 Gew.-%, bezogen auf die Formmasse, eines thermoplastischen oder duroplastischen Kunststoffs und 0,05 bis 6 Gew.-%, bezogen auf die Formmasse, eines Antistatikums, seinerseits bestehend aus 5 bis 40 Gew.-%, bezogen auf das Antistatikum, einer Verbindung der Formel I

$$R^1 - \left[ (SO_3)_m M \right]_n \qquad (I)$$

worin $R^1$ einen geradkettigen oder verzweigten, aliphatischen Kohlenwasserstoffrest mit 4 bis 30 C-Atomen oder einen cycloaliphatischen Kohlenwasserstoffrest mit 6 bis 30 C-Atomen, M ein Alkali- oder Erdalkalimetallatom, m 1 oder 2 und n 1, 2, 3 oder 4 bedeuten, wobei jede Sulfonatgruppe endständig

oder mittelständig sein kann, und 60 bis 95 Gew.-%, bezogen auf das Antistatikum, einer Verbindung der Formel II

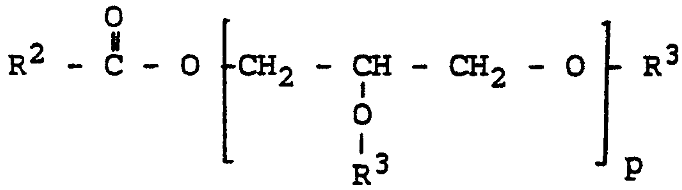 (II),

worin $R^2$ einen aliphatischen Kohlenwasserstoffrest mit 3 bis 23 C-Atomen, der durch ein oder zwei Hydroxylgruppen substituiert sein kann, einen cycloaliphatischen oder aromatischen Kohlenwasserstoffrest mit 6 bis 22 C-Atomen,

$R^3$ ein Wasserstoffatom oder den Rest

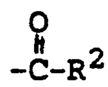,

worin $R^2$ die vorgenannte Bedeutung hat, und p 1, 2, 3 oder 4 bedeuten.

2. Kunststoff-Formmasse nach Anspruch 1, dadurch gekennzeichnet, daß das Antistatikum aus 5 bis 40 Gew.-%, bezogen auf das Antistatikum, einer Verbindung der Formel I

$$R^1 - \left[ (SO_3)_m M \right]_n \qquad (I)$$

worin $R^1$ einen geradkettigen oder verzweigten, aliphatischen Kohlenwasserstoffrest mit 4 bis 30 C-Atomen oder einen cycloaliphatischen Kohlenwasserstoffrest mit 6 bis 30 C-Atomen, M ein Natriumatom, m 1 oder 2 und n 1, 2, 3 oder 4 bedeuten, wobei jede Sulfonatgruppe endständig oder mittelständig sein kenn, und 60 bis 95 Gew.-% bezogen auf das Antistatikum, einer Verbindung der Formel II

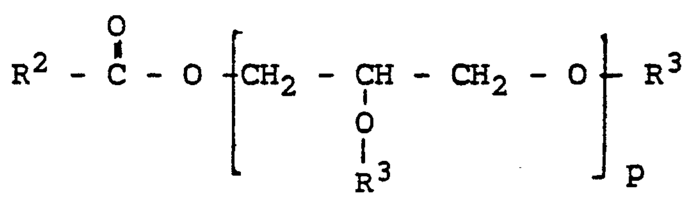 (II),

worin $R^2$ einen aliphatischen Kohlenwasserstoffrest mit 3 bis 23 C-Atomen, der durch ein oder zwei Hydroxylgruppen substituiert sein kann,

$R^3$ ein Wasserstoffatom oder den Rest

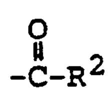,

worin $R^2$ die vorgenannte Bedeutung hat, und p 1, 2, 3 oder 4 bedeuten.

3. Kunststoff-Formmasse nach Anspruch 1, dadurch gekennzeichnet, daß sie zusätzlich Antioxidantien, Verarbeitungsstabilisatoren, Lichtschutzmittel, Gleitmittel, Füllstoffe, Flammschutzmittel, Weichmacher, Treibmittel, Verarbeitungshilfsmittel, Schlagzähigkeitsmodifikatoren, Pigmente, Färbemittel oder Farbstoffe enthält.

4. Antistatikum, bestehend aus 5 bis 40 Gew.-%, bezogen auf das Antistatikum, einer Verbindung der Formel I

$$R^1-\left[(SO_3)_mM\right]_n \qquad (I)$$

worin $R^1$ einen geradkettigen oder verzweigten, aliphatischen Kohlenwasserstoffrest mit 4 bis 30 C-Atomen oder einen cycloaliphatischen Kohlenwasserstoffrest mit 6 bis 30 C-Atomen, M ein Alkali- oder Erdalkalimetallatom, m 1 oder 2 und n 1, 2, 3 oder 4 bedeuten, wobei jede Sulfonatgruppe endständig oder mittelständig sein kann, und 60 bis 95 Gew.-%, bezogen auf das Antistatikum, einer Verbindung der Formel II

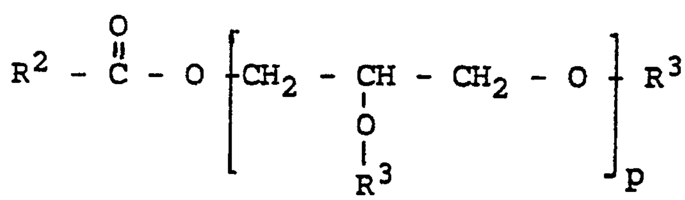

(II),

worin $R^2$ einen aliphatischen Kohlenwasserstoffrest mit 3 bis 23 C-Atomen, der durch ein oder zwei Hydroxylgruppen substituiert sein kann, einen cycloaliphatischen oder aromatischen Kohlenwasserstoffrest mit 6 bis 22 C-Atomen,

$R^3$ ein Wasserstoffatom oder den Rest

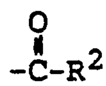

,

worin $R^2$ die vorgenannte Bedeutung hat, und p 1, 2, 3 oder 4 bedeuten.

Europäisches Patentamt

# EUROPÄISCHER RECHERCHENBERICHT

Nummer der Anmeldung

**EP 91 10 7306**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-1 669 709 (BASF AG)<br>* Beispiele 1,2; Ansprüche 1,2 *<br>– – – | 1-3 | C 08 K 5/00 //<br>(C 08 K 5/00<br>C 08 K 5:10<br>C 08 K 5:42 ) |
| X | DE-A-3 310 417 (P.H. URDAHL)<br>* Beispiel 2, Nr. 6-8,19,20; Ansprüche 1-4 *<br>– – – | 1-2 | |
| X | DATABASE WPIL, Nr. 89-273437, Derwent Publications Ltd, London, GB;<br>& JP-A-1 197 552 (MITSUBISHI RAYON K.K.)<br>* Zusammenfassung *<br>– – – | 1-2 | |
| X | DATABASE WPIL, Nr. 88-312295, Derwent Publications Ltd, London, GB;<br>& JP-A-63 230 764 (KAO CORP.)<br>* Zusammenfassung *<br>– – – | 1-2 | |
| A | EP-A-0 114 503 (ROBOSERVE LTD)<br>* Anspruch 1 *<br>– – – – – | 1 | |

RECHERCHIERTE SACHGEBIETE (Int. Cl.5)

C 08 K
C 08 L

Der vorliegende Recherchenbericht wurde für alle Patentansprüche erstellt

| Recherchenort | Abschlußdatum der Recherche | Prüfer |
|---|---|---|
| Den Haag | 01 August 91 | FUHR C.K.B. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument